# EUROPÄISCHE PATENTSCHRIFT

(11) **EP 2 612 030 B1**
(45) Veröffentlichungstag und Bekanntmachung des Hinweises auf die Patenterteilung: **30.04.2014**
(21) Anmeldenummer: 11730291.9
(22) Anmeldetag: 06.07.2011
(51) Int. Cl.: F04B 1/04, F04B 11/00

(54) **KOLBENPUMPE ZUR FÖRDERUNG VON FLUIDEN UND ZUGEHÖRIGE FAHRZEUGBREMSANLAGE**
PISTON PUMP FOR DELIVERING FLUIDS, AND ASSOCIATED VEHICLE BRAKE SYSTEM
POMPE À PISTON POUR REFOULER DES FLUIDES ET SYSTÈME DE FREINAGE POUR VÉHICULE ASSOCIÉ

(30) Priorität: 02.09.2010 DE 102010040157
(43) Veröffentlichungstag der Anmeldung: 10.07.2013
(73) Patentinhaber: Robert Bosch GmbH, 70442 Stuttgart (DE)
(72) Erfinder: GAERTNER, Oliver, 74232 Abstatt (DE); SCHULLER, Wolfgang, 74389 Cleebronn (DE)
(86) Internationale Anmeldenummer: PCT/EP2011/061403
(87) Internationale Veröffentlichungsnummer: WO 2012/028363

(56) Entgegenhaltungen:
- WO-A1-2004/088137
- DE-A1- 10 121 674
- DE-A1-102006 027 555

## Beschreibung

### Stand der Technik

Die Erfindung geht aus von einer Kolbenpumpe zur Förderung von Fluiden nach der Gattung des unabhängigen Patentanspruchs 1. Zudem betrifft die vorliegende Erfindung eine Fahrzeugbremsanlage mit einer solchen Kolbenpumpe.

Kolbenpumpen sind aus dem Stand der Technik in unterschiedlichen Ausführungsformen bekannt. Beispielsweise werden in Fahrzeugbremsanlagen häufig Radialkolbenpumpen mit mehreren Pumpenelementen zur Förderung von Druckmitteln verwendet, bei welchen wenigstens ein Kolben mittels eines Exzenters hin und her bewegt werden kann. Typischerweise bestehen diese sogenannten Pumpenelemente aus einem Kolben, einer häufig als Zylinder ausgebildeten Kolbenlauffläche, Einlass- und Auslassventilen sowie Dichtelementen. Die Ventile dienen der Fluidsteuerung bei der Pumpbewegung des Kolbens. Hierbei dient das Einlassventil dazu, das Fluid während der Verdichtungsphase nicht in den Ansaugraum zurückströmen zu lassen, das Auslassventil verhindert die Rückströmung des Fluids von der Druckseite in den Pumpeninnenraum. Typischerweise sind diese Ventile als federbelastete Kugelventil ausgebildet, wobei der Abströmkanal für das Auslassventil durch einen sogenannten Auslassventildeckel und den Pumpenzylinder gebildet wird und das Auslassventil im Auslassventildeckel untergebracht ist.

Ein der vorliegenden Erfindung nahe kommender Stand der Technik ist in dem Dokument WO 2004/088137 A1 offenbart. Die aus diesem Dokument bekannte Kolbenpumpe umfasst einen Kolben, ein Zylinderelement und einen zwischen einem Einlassventil und einem Auslassventil angeordneten Druckraum, der von einem Deckel abgeschlossen ist. Im Fluidstom nach dem Auslassventil sind Mittel zum Drosseln dieses Fluidstroms vorgesehen. Diese Mittel sind einteilig mit dem Zylinderelement ausgebildet.

Auch in der Offenlegungsschrift DE 10 2008 002 740 A1 wird eine Kolbenpumpe zur Bremsdruckregelung in einer hydraulischen Fahrzeugbremsanlage beschrieben. Die beschriebene Kolbenpumpe umfasst ein Pumpengehäuse, eine im Pumpengehäuse angeordnete Aufnahmebohrung für die Kolbenpumpe und einen die Aufnahmebohrung nach außen verschließenden Ventildeckel, in welchem ein Auslassventil und erste und zweite Kanalabschnitte eines Abströmkanals untergebracht sind. Die Abströmgeometrie beeinflusst das Geräuschverhalten der Kolbenpumpe und wird deswegen meist mit einer geeigneten Verjüngung des Abströmkanals ausgeführt, welche dann eine Drosselwirkung darstellt.

In der Offenlegungsschrift DE 10 2006 027 555 A1 wird beispielsweise eine Kolbenpumpe mit reduzierter Geräuschentwicklung beschrieben. Die beschriebene Kolbenpumpe zur Förderung von Fluiden umfasst einen Kolben, ein Zylinderelement und einen zwischen einem Einlassventil und einem Auslassventil angeordneten Druckraum, welcher von einem Deckel abgeschlossen ist, wobei das Auslassventil einen als Kugel ausgeführten Schließkörper, eine auf den Schließkörper wirkende als Spiralfeder ausgeführte Vorspanneinrichtung, ein Basiselement zum Abstützen der Vorspanneinrichtung und ein Scheibenelement umfasst, und wobei ein Dichtsitz des Auslassventils am Scheibenelement angeordnet ist. Durch die Verwendung des Scheibenelements soll sichergestellt werden, dass Bauteiltoleranzen verschiedener Bauteile der Kolbenpumpe sich nicht negativ auf das Auslassventil auswirken können, hierbei erfordert der Einbauraum für den als Kugel ausgeführten Schließkörper und die als Spiralfeder ausgeführte Vorspanneinrichtung einen großen Platzbedarf.

### Offenbarung der Erfindung

Die erfindungsgemäße Kolbenpumpe zur Förderung von Fluiden mit den Merkmalen des unabhängigen Patentanspruchs 1 hat demgegenüber den Vorteil, dass der Einbauraum für die Drosselmittel und somit für die Kolbenpumpe minimiert werden kann.

Ausführungsformen der vorliegenden Erfindung können mittels der federnden Ringscheibe bei hochviskosem Zustand des Fluids in vorteilhafter Weise den Innendruck der Kolbenpumpe reduzieren. Dadurch reduzieren sich in vorteilhafter Weise die Antriebsleistung des Pumpenantriebs sowie die Belastung der kraftübertragenden Einzelteile, wie beispielsweise Lager, Kolben, Hochdruckdichtringe usw. Dies kann bei zukünftigen Konstruktionen bei geeignetem Design zur Kostenersparnis ausgenutzt werden.

Der Kern der vorliegenden Erfindung besteht darin, die Drosselmittel außenliegend an der Kolbenpumpe anzuordnen und dadurch in vorteilhafter Weise den erforderlichen Einbauraum der Kolbenpumpe zu verkleinern. Alternativ kann der vorgelagerte Bauraum in der Kolbenpumpe als Dämpferkammer oder als Einbauraum für weitere Dämpferelemente genutzt werden. Hierbei umfassen die Drosselmittel eine Ringscheibe, welche auf den Pumpenzylinder aufgeschoben ist und durch den Pumpenzylinder geführt ist, wobei der axiale Weg der Ringscheibe einen variablen ersten Drosselquerschnitt einstellt.

Die erfindungsgemäße Kolbenpumpe zur Förderung von Fluiden umfasst einen Kolben, ein Zylinderelement und einen zwischen einem Einlassventil und einem Auslassventil angeordneten Druckraum, welcher von einem Deckel abgeschlossen ist, wobei im Fluidstrom nach dem Auslassventil Mittel zum Drosseln des Fluidstroms vorgesehen sind. Erfindungsgemäß umfassen die Drosselmittel eine auf dem Zylinderelement geführte bewegliche Ringscheibe, deren Innendurchmesser an den Außendurchmesser des Zylinderelements angepasst ist, wobei der axiale Weg der Ringscheibe einen variablen ersten Drosselquerschnitt einstellt.

Die erfindungsgemäße Kolbenpumpe kann beispielsweise in einer Fahrzeugbremsanlage zur Förderung von Druckmitteln verwendet werden.

Durch die in den abhängigen Ansprüchen aufgeführten Maßnahmen und Weiterbildungen sind vorteilhafte Verbesserungen der im unabhängigen Patentanspruch 1 angegebenen Kolbenpumpe zur Förderung von Fluiden möglich.

Besonders vorteilhaft ist, dass die Ringscheibe mindestens eine Öffnung aufweisen kann, welche einen zweiten Drosselquerschnitt fest vorgibt. Der zweite Drosselquerschnitt kann vorzugsweise auf einen Volumenstrom in einem vorgegebenen Temperaturbereich optimiert werden. Der zweite Drosselquerschnitt kann beispielsweise auf einen Volumenstrom in einem Temperaturbereich von 0°C bis 120°C optimiert werden. Auf Grund von Temperaturänderung ändert sich auch die Viskosität des Fluids und somit der Strömungswiderstand an der Ringscheibe. Dadurch wird die Ringscheibe nun zusätzlich axial verschoben, so dass sich über die Vorspanneinrichtung der freie Querschnitt vergrößert bzw. ein neuer freier Querschnitt einstellt. Dadurch steigt der Innendruck der Pumpe in vorteilhafter Weise, insbesondere bei niedrigen Temperaturen nicht an und andere Bauteile der Kolbenpumpe werden nicht beschädigt.

In vorteilhafter Ausgestaltung der erfindungsgemäßen Kolbenpumpe drückt eine Vorspanneinrichtung die Ringscheibe zur dynamischen Drosselung des durch mindestens eine Abströmöffnung zwischen Deckel und Zylinderelement geführten Fluidstroms axial gegen eine am Deckel angeordnete Drosselstelle. Die Vorspanneinrichtung ist vorzugsweise als Federelement ausgeführt, wobei die gewählten Federeigenschaften der Vorspanneinrichtung den axialen Weg der Ringscheibe definieren. So kann die Vorspanneinrichtung beispielsweise als Spiralfeder und/oder Flachfeder und/oder Tellerfeder und/oder Wellenring ausgeführt werden. Somit drückt eine definierte Federkraft die Ringscheibe axial dichtend an den Deckel. Hierbei ist die Federkraft so gewählt, dass sich über den axialen Weg der Ringscheibe ein Drosselquerschnitt einstellen lässt. Diese dynamischen Drosselmittel wirken durch das Verhältnis von Federkraft/Weg.

In weiter vorteilhafter Ausgestaltung der erfindungsgemäßen Kolbenpumpe sind Mittel zum Abstützen der als Federelement ausgeführten Vorspanneinrichtung als Ringschulter am Umfang des Zylinderelements ausgeführt. Die Ringschulter kann in vorteilhafter Weise einfach durch einen Absatz nach innen am Außenumfang des Zylinderelements umgesetzt werden.

In weiterer vorteilhafter Ausgestaltung der erfindungsgemäßen Kolbenpumpe bildet eine Stirnfläche des Deckels die Drosselstelle.

Ein Ausführungsbeispiel der Erfindung ist in den Zeichnungen dargestellt und wird in der nachfolgenden Beschreibung näher erläutert. In den Zeichnungen bezeichnen gleiche Bezugszeichen Komponenten bzw. Elemente, die gleiche bzw. analoge Funktionen ausführen.

### Kurze Beschreibung der Zeichnungen

Figur 1 zeigt eine schematische perspektivische Darstellung eines Ausführungsbeispiels einer erfindungsgemäßen Kolbenpumpe zur Förderung von Fluiden.
Figur 2 zeigt einen perspektivischen Querschnitt durch einen hinteren Bereich der in Fig. 1 dargestellten erfindungsgemäßen Kolbenpumpe zur Förderung von Fluiden.

### Ausführungsformen der Erfindung

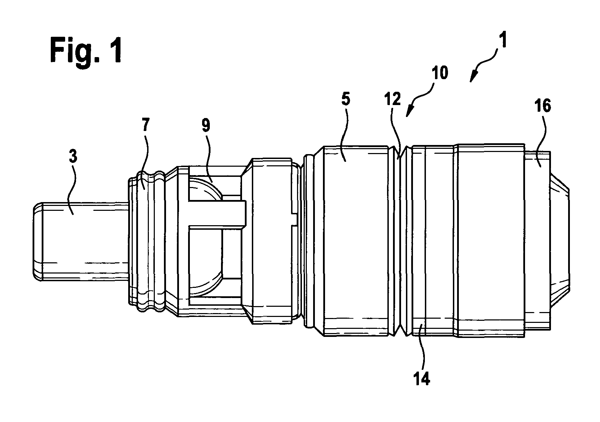

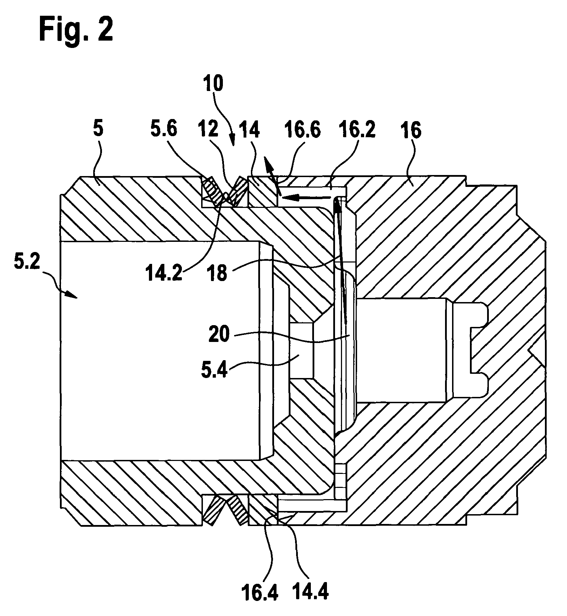

Wie aus Fig. 1 und 2 ersichtlich ist, umfasst eine erfindungsgemäße Kolbenpumpe 1 zur Förderung von Fluiden einen Kolben 3, ein Zylinderelement 5, ein Dichtelement 7 und einen Fluidfilter 9, welcher vor einer nicht sichtbaren Einlassöffnung angeordnet ist, hinter der ein nicht sichtbares Einlassventil angeordnet ist. Zwischen dem nicht dargestellten Einlassventil und einem nicht dargestellten Auslassventil ist im Inneren des Zylinderelements 5 ein Druckraum 5.2 angeordnet, welcher von einem Deckel 16 abgeschlossen ist, in welchem das Auslassventil angeordnet ist. In der Darstellung ist nur ein an einer Auslassöffnung 5.4 des Druckraums 5.2 angeordneter Dichtsitz 20 des Auslassventils dargestellt. Zusätzlich umfasst das Auslassventil in der Regel einen Schließkörper, eine auf den Schließkörper wirkende Vorspanneinrichtung und Mittel zum Abstützen der Vorspanneinrichtung. Im Fluidstrom 18 sind nach dem Auslassventil Mittel 10 zum Drosseln des Fluidstroms 18 vorgesehen, um die Geräuschbildung zu reduzieren.

Der Deckel 16 kann auf bekannte Weise entweder spanend oder umformend hergestellt werden, wobei sich unter wirtschaftlicher Betrachtung für große Stückzahlen das Umformverfahren anbietet. Die Abströmgeometrie beeinflusst das Geräuschverhalten der Kolbenpumpe und wird deswegen geeignet ausgebildet. Diese Ausbildung ist bei aus dem Stand der Technik bekannten Kolbenpumpen meist eine geeignete Verjüngung des Abströmkanals, welche dann eine Drosselwirkung darstellt. Durch diese Drosselwirkung wird ein hydraulischer Tiefpass erzeugt, welcher sich positiv auf die unerwünschte Geräuschentwicklung auswirkt. Das Verhalten der dynamischen Viskosität der Bremsflüssigkeit im Bereich zwischen 0° und 120° C kann als nahezu konstant angesehen werden und die optimale Drosselwirkung wird für diesen Temperaturbereich definiert. Als Resultat der großen Veränderung der kinematischen Viskosität der Bremsflüssigkeit über den geforderten Temperaturbereich von -40°C bis 120°C belastet die Drossel vor allem bei niederen Temperaturen die druckbelasteten Bauteile der Kolbenpumpe sowie des gesamten Pumpenantriebes. Durch den verengten Querschnitt wird bei niederen Temperaturen eine deutliche erhöhte Flüssigkeitsreibung indiziert, dies führt zu einer deutlichen Überhöhung des Pumpeninnendruckes und daraus resultieren die oben genannten Belastungen.

Erfindungsgemäß umfassen die Drosselmittel 10 eine auf dem Zylinderelement 5 geführte bewegliche Ringscheibe 14, deren Innendurchmesser an den Außendurchmesser des Zylinderelements 5 angepasst ist. Hierbei stellt der axiale Weg der Ringscheibe 14 einen variablen ersten Drosselquerschnitt ein. Die dargestellte erfindungsgemäße Kolbenpumpe 1 kann beispielsweise in einer nicht dargestellten Aufnahmebohrung eines Pumpengehäuses bzw. eines Fluidblocks angeordnet werden. In die Aufnahmebohrung können quer verlaufende Druckmittelkanäle münden, durch welche Fluid über den Fluidfilter 9 zur Einlassöffnung der Kolbenpumpe 1 hin geführt wird bzw. von der mindestens einen Abströmöffnung 16.6 der Kolbenpumpe 1 weggeführt wird.

Wie aus Fig. 1 und 2 weiter ersichtlich ist, drückt eine Vorspanneinrichtung 12 die Ringscheibe 14 zur dynamischen Drosselung des durch die mindestens eine Abströmöffnung 16.6 zwischen Deckel 16 und Zylinderelement 5 geführten Fluidstroms 18 gegen eine am Deckel 16 angeordnete Drosselstelle 16.4. Im dargestellten Ausführungsbeispiel ist die Vorspanneinrichtung 12 als Tellerfeder ausgeführt. Alternativ kann die Vorspanneinrichtung 12 als Spiralfeder und/oder Flachfeder und/oder Wellenring ausgeführt werden. Das Fluid kann über mehrere Fluidkanäle 16.2 bei geöffnetem Auslassventil vom Auslassventilsitz 20 zur Abströmöffnung 16.6 geführt.

Wie aus Fig. 2 weiter ersichtlich ist, wird die Ringscheibe 14 über eine Führungsfläche 14.2 vom Zylinderelement 5 geführt und im Ausgangszustand von der Vorspanneinrichtung 12 axial mit einer Dichtfläche 14.4 gegen die Drosselstelle 16.4 am Deckel 16 gedrückt, welche im dargestellten Ausführungsbeispiel durch eine Stirnfläche des Deckels 16 gebildet wird. Der axiale Weg der Ringscheibe 14 wird durch die gewählten Federeigenschaften der Vorspanneinrichtung 12 definiert. Des Weiteren sind die Mittel 5.6 zum Abstützen der als Federelement ausgeführten Vorspanneinrichtung 12 im dargestellten Ausführungsbeispiel als Ringschulter am Umfang des Zylinderelements 5 ausgeführt.

Zusätzlich kann die Ringscheibe 14 mindestens eine Öffnung aufweisen, welche einen zweiten Drosselquerschnitt fest vorgibt. Der zweite Drosselquerschnitt kann auf einen Volumenstrom in einem vorgegebenen Temperaturbereich optimiert werden. So kann der zweite Drosselquerschnitt beispielsweise auf einen Volumenstrom in einem Temperaturbereich von 0°C bis 120°C optimiert werden. Auf Grund von Temperaturänderung ändert sich auch die Viskosität des Fluids und somit der Strömungswiderstand am zweiten fest vorgegebenen Drosselquerschnitt der Ringscheibe 14. Dadurch wird die Ringscheibe 14 nun zusätzlich axial verschoben, so dass sich über die Vorspanneinrichtung 12 der freie Querschnitt vergrößert bzw. ein neuer freier Querschnitt einstellt. Dadurch steigt der Innendruck der Kolbenpumpe 1 in vorteilhafter Weise, insbesondere bei niedrigen Temperaturen nicht an, so dass andere Bauteile der Kolbenpumpe 1 nicht beschädigt werden.

Erfindungsgemäße Ausführungsformen der vorliegenden Erfindung ermöglichen in vorteilhafter Weise eine optimale Ausnutzung des Bauraums und ein sehr gutes NVH-Verhalten. Mittels der federnden Ringscheibe kann bei hochviskosem Zustand des Fluids der Innendruck der Kolbenpumpe in vorteilhafter Weise reduziert werden. Dadurch reduzieren sich die Antriebsleistung, sowie die Belastung der kraftübertragenden Einzelteile wie Lager, Kolben, Hochdruckdichtringe usw. Dies kann bei zukünftigen Konstruktionen bei geeignetem Design zur Kostenersparnis ausgenutzt werden.

## Patentansprüche

1. Kolbenpumpe zur Förderung von Fluiden, welche einen Kolben (3), ein Zylinderelement (5) und einen zwischen einem Einlassventil und einem Auslassventil angeordneten Druckraum (5.2) umfasst, welcher von einem Deckel (16) abgeschlossen ist, wobei im Fluidstrom (18) nach dem Auslassventil Mittel (10) zum Drosseln der Fluidstroms (18) vorgesehen sind, **dadurch gekennzeichnet, dass** die Drosselmittel (10) eine auf dem Zylinderelement (5) geführte bewegliche Ringscheibe (14) umfassen, deren Innendurchmesser an den Außendurchmesser des Zylinderelements (5) angepasst ist, wobei der axiale Weg der Ringscheibe (14) einen variablen ersten Drosselquerschnitt einstellt.

2. Kolbenpumpe nach Anspruch 1, **dadurch gekennzeichnet, dass** die Ringscheibe (14) mindestens eine Öffnung aufweist, welche einen zweiten Drosselquerschnitt fest vorgibt.

3. Kolbenpumpe nach Anspruch 2, **dadurch gekennzeichnet, dass** der zweite Drosselquerschnitt auf einen Volumenstrom in einem vorgegebenen Temperaturbereich optimiert ist.

4. Kolbenpumpe nach Anspruch 3, **dadurch gekennzeichnet, dass** der zweite Drosselquerschnitt auf einen Volumenstrom in einem Temperaturbereich von 0°C bis 120°C optimiert ist.

5. Kolbenpumpe nach einem der Ansprüche 1 bis 4, **dadurch gekennzeichnet, dass** eine Vorspanneinrichtung (12) die Ringscheibe (14) zur dynamischen Drosselung des durch mindestens eine Abströmöffnung (16.6) zwischen Deckel (16) und Zylinderelement (5) geführten Fluidstrom (18) axial gegen eine am Deckel (16) angeordnete Drosselstelle (16.4) drückt.

6. Kolbenpumpe nach Anspruch 5, **dadurch gekennzeichnet, dass** die Vorspanneinrichtung (12) als Federelement ausgeführt ist, wobei die gewählten Federeigenschaften der Vorspanneinrichtung (12) den axialen Weg der Ringscheibe (14) definieren.

7. Kolbenpumpe nach Anspruch 5 oder 6, **dadurch gekennzeichnet, dass** die Vorspanneinrichtung (12) als Spiralfeder und/oder Flachfeder und/oder Tellerfeder und/oder Wellenring ausgeführt ist.

8. Kolbenpumpe nach einem der Ansprüche 1 bis 7, **dadurch gekennzeichnet, dass** Mittel (5.6) zum Abstützen der als Federelement ausgeführten Vorspanneinrichtung (12) als Ringschulter am Umfang des Zylinderelements (5) ausgeführt sind

9. Kolbenpumpe nach einem der Ansprüche 1 bis 8 **dadurch gekennzeichnet, dass** eine Stirnfläche des Deckels (16) die Drosselstelle (16.4) bildet.

10. Fahrzeugbremsanlage **gekennzeichnet durch** mindestens eine Kolbenpumpe (10) nach einem der Ansprüche 1 bis 9.

## Claims

1. Piston pump for delivering fluids comprising a piston (3), a cylinder element (5) and a pressure chamber (5.2) which is arranged between the inlet valve and an outlet valve and is closed by a cover (16), wherein means (10) for throttling the fluid flow (18) are provided in the fluid flow (18) downstream of the outlet valve, **characterized in that** the throttling means (10) comprise a movable annular disk (14) which is guided on the cylinder element (5), and the internal diameter of which is adapted to the external diameter of the cylinder element (5), wherein the axial travel of the annular disk (14) sets a variable first throttle cross section.

2. Piston pump according to Claim 1, **characterized in that** the annular disk (14) has at least one opening which fixedly predefines a second throttle cross section.

3. Piston pump according to Claim 2, **characterized in that** the second throttle cross section is optimized for a volume flow in a predefined temperature range.

4. Piston pump according to Claim 3, **characterized in that** the second throttle cross section is optimized for a volume flow in a temperature range from 0° to 120°C.

5. Piston pump according to any of Claims 1 to 4, **characterized in that** for dynamic throttling of the fluid flow (18) which is guided through at least one outflow opening (16.6) between the cover (16) and cylinder element (5), a pretension device (12) presses the annular disk (14) axially against a throttle point (16.4) arranged on the cover (16).

6. Piston pump according to Claim 5, **characterized in that** the pretension device (12) is formed as a spring element, wherein the selected spring properties of the pretension device (12) define the axial travel of the annular disk (14).

7. Piston pump according to Claim 5 or 6, **characterized in that** the pretension device (12) is designed as a spiral spring and/or leaf spring and/or cup spring and/or undulating ring.

8. Piston pump according to any of Claims 1 to 7, **characterized in that** means (5.6) for supporting the pretension device (12) formed as a spring element are formed as a ring shoulder on the periphery of the cylinder element (5).

9. Piston pump according to any of Claims 1 to 8, **characterized in that** a face of the cover (16) forms the throttle point (16.4).

10. Vehicle brake system **characterized by** at least one piston pump (10) according to any of Claims 1 to 9.

## Revendications

1. Pompe à piston pour refouler des fluides, qui comprend un piston (3), un élément cylindrique (5) et une chambre de pression (5.2) disposée entre une soupape d'entrée et une soupape de sortie, qui est fermée par un couvercle (16), des moyens (10) pour étrangler l'écoulement de fluide (18) étant prévus dans l'écoulement de fluide (18) après la soupape de sortie, **caractérisée en ce que** les moyens d'étranglement (10) comprennent une rondelle annulaire mobile (14) guidée sur l'élément cylindrique (5), dont le diamètre intérieur est adapté au diamètre extérieur de l'élément cylindrique (5), la course axiale de la rondelle annulaire (14) ajustant une première section transversale d'étranglement variable.

2. Pompe à piston selon la revendication 1, **caractérisée en ce que** la rondelle annulaire (14) présente au moins une ouverture qui prédéfinit fixement une deuxième section transversale d'étranglement.

3. Pompe à piston selon la revendication 2, **caractérisée en ce que** la deuxième section transversale d'étranglement est optimisée à un débit volumique dans une plage de températures prédéfinie.

4. Pompe à piston selon la revendication 3, **caractérisée en ce que** la deuxième section transversale d'étranglement est optimisée à un débit volumique dans une plage de températures de 0°C à 120°C.

5. Pompe à piston selon l'une quelconque des revendications 1 à 4, **caractérisée en ce qu'**un dispositif de précontrainte (12) presse axialement la rondelle annulaire (14) vers un point d'étranglement (16.4) disposé au niveau du couvercle (16) pour réaliser un étranglement dynamique de l'écoulement fluidique (18) guidé à travers au moins une ouverture d'évacuation (16.6) entre le couvercle (16) et l'élément cylindrique (5).

6. Pompe à piston selon la revendication 5, **caractérisée en ce que** le dispositif de précontrainte (12) est réalisé sous forme d'élément de ressort, les propriétés de ressort sélectionnées du dispositif de précontrainte (12) définissant la course axiale de la rondelle annulaire (14).

7. Pompe à piston selon la revendication 5 ou 6, **caractérisée en ce que** le dispositif de précontrainte (12) est réalisé sous forme de ressort spiral et/ou sous forme de ressort plat et/ou sous forme de ressort Belleville et/ou sous forme de joint torique.

8. Pompe à piston selon l'une quelconque des revendications 1 à 7, **caractérisée en ce que** des moyens (5.6) pour supporter le dispositif de précontrainte (12) réalisé sous forme d'élément de ressort sont réalisés en tant qu'épaulement annulaire à la périphérie de l'élément cylindrique (5).

9. Pompe à piston selon l'une quelconque des revendications 1 à 8, **caractérisée en ce qu'**une surface frontale du couvercle (16) forme le point d'étranglement (16.4).

10. Installation de frein de véhicule **caractérisée par** au moins une pompe à piston (10) selon l'une quelconque des revendications 1 à 9.
